# EUROPÄISCHE PATENTSCHRIFT

(11) **EP 3 530 588 B1**
(45) Veröffentlichungstag und Bekanntmachung des Hinweises auf die Patenterteilung: **12.10.2022**
(21) Anmeldenummer: 19156846.8
(22) Anmeldetag: 13.02.2019
(51) Int. Cl.: B65D 77/04, B65D 81/02, B65D 65/46, B65D 1/36, B65D 81/133, B65D 77/26, B65D 81/26, B65D 85/60, A01G 9/02, B65D 77/20, B65D 25/28

(54) **VERPACKUNGSSCHALE, IHRE VERWENDUNG, UND VERPACKUNG MIT DER VERPACKUNGSSCHALE**
PACKAGING TRAY, ITS USE, AND PACKAGE INCLUDING THE TRAY
BARQUETTE DE CONDITIONNEMENT, SON UTILISATION, ET EMBALLAGE DOTÉ DE LA BARQUETTE

(30) Priorität: 22.02.2018 CH 2172018
(43) Veröffentlichungstag der Anmeldung: 28.08.2019
(73) Patentinhaber: Bachmann Forming AG, 6280 Hochdorf (CH)
(72) Erfinder: Bachmann, Reto, 6280 Hochdorf (CH)
(74) Vertreter: Nückel, Thomas

(56) Entgegenhaltungen:
- DE-A- 2 031 764
- US-A- 5 385 766

## Beschreibung

### Technisches Gebiet

Die Erfindung betrifft eine Verpackungsschale, eine Verwendung der Verpackungsschale, sowie eine Verpackung, die die Verpackungsschale enthält.

Um Waren wie beispielsweise Lebensmittel zu lagern, kann eine Verpackungsschale benutzt werden. Die Verpackungsschale verhindert eine Beschädigung der Ware. Zudem kann die Verpackungsschale, insbesondere bei Konfekt, als sogenannter Spiegel dazu dienen, die Ware zu positionieren.

### Stand der Technik

Aus der Druckschrift EP 1 931 579 B1 ist eine Verpackung mit einer Stützstruktur für Konfekt bekannt. Die Verpackung umfasst eine Schachtel, in die eine Stützstruktur für das Konfekt eingeführt ist. Die Stützstruktur weist für jeweils ein Konfekt ein ringförmiges Grundelement auf, auf dem der untere Teil des Konfekts aufliegt. Die Stützstruktur weist zudem ein oberhalb des Grundelements angeordnetes ringförmiges Rückhalteelement auf, das mit dem Grundelement mittels drahtartiger Verbindungselemente verbunden ist. Das Rückhalteelement bildet eine Öffnung zum Aufnehmen des jeweiligen Konfekts. Die Stützstruktur weist mehrere der Rückhaltelemente auf, die zueinander koplanar und in parallelen Reihen angeordnet und miteinander über drahtartige Verbindungsstege verbunden sind. Die drahtartigen beziehungsweise ringförmigen Elemente der Stützstruktur haben einen Durchmesser zwischen 1 und 3 mm. Diese Stützstruktur ist relativ schwer. Zudem wird zur Herstellung der Stützstruktur eine Spritzgussmaschine mit einer Spritzgussform benötigt, die relativ teuer ist. Auch die Spritzgussform selbst ist teuer.

US 3 642 967 offenbart eine Verpackungsschale gemäß dem Oberbegriff des Anspruchs 1, und ein Verfahren zu ihrer Herstellung.

Zur Herstellung wird das Material geschlitzt, sodass ein bestimmtes Muster gebildet wird. Anschliessend wird das so geschlitzte Materialstück durch Ausüben einer Kraft zu einer netzartigen Struktur öffnet und auf eine Temperatur erhitzt, bei der das elastische Gedächtnis des Materials ausgeschaltet wird, sodass das erhitzte Materialstück eine ihm gegebene Form beibehält.

### Darstellung der Erfindung

Eine Aufgabe der Erfindung ist es, eine Verpackungsschale und eine Verpackung mit Verpackungsschale anzugeben, die eine hohe Formstabilität bei gleichzeitig geringem Gewicht aufweist.

Aufgrund des geringen Materialeinsatzes können vorteilhafter Weise bei der Herstellung der erfindungsgemässen Verpackungsschale Rohstoffe und damit Ressourcen gespart werden.

Ein weiterer Vorteil der erfindungsgemässen Verpackungsschale besteht darin, dass die Taktzeiten für die Herstellung der Verpackungsschale reduziert werden können. Das zur Herstellung verwendete extrudierte Kunststoffnetz hat ein ausserordentlich geringes Eigengewicht (Flächengewicht). Daher ist auch entsprechend wenig thermische Energie nötig, um das Kunststoffnetz so weit zu erwärmen, dass es plastisch verformbar ist und in die gewünschte Form gebracht werden kann. Damit kann die Aufheizdauer verringert und der Energieaufwand zur Herstellung der Verpackungsschale reduziert werden.

Ein zusätzlicher Vorteil der erfindungsgemässen Verpackungsschale besteht darin, dass die Verpackungsschale aufgrund ihrer offenmaschigen Bauweise den Blick des Betrachters auf die in der Verpackungsschale lagernde Ware aus jeder Richtung erlaubt.

Auch die Stapelbarkeit der erfindungsgemässen Verpackungsschale ist gegeben. Auf diese Weise können grössere Stückzahlen der Verpackungsschale gestapelt und der Stapel mit geringem Volumen kostengünstig transportiert werden.

Auch bei der Entsorgung bietet die erfindungsgemässe Verpackungsschale Vorteile. Sie kann ohne weiteres zu einem Knäuel zusammengeknüllt werden und behält dann diese Form im Wesentlichen dauerhaft bei.

Die Aufgabe wird durch eine Verpackungsschale mit den in Patentanspruch 1 angegebenen Merkmalen gelöst.

Die erfindungsgemässe Verpackungsschale umfasst eine aus einem extrudierten Kunststoffnetz gebildete formstabile Stützstruktur, wobei die Stützstruktur ein oder mehrere Aufnahmefächer mit jeweils einer Vertiefung zur Aufnahme der zu verpackenden Ware aufweist.

Die Aufgabe wird zudem durch eine Verpackung mit den in Patentanspruch 11 angegebenen Merkmalen gelöst.

Die erfindungsgemässe Verpackung umfasst die oben beschriebene Verpackungsschale und eine Schale, in die die Verpackungsschale eingelegt ist. Zudem ist ein Deckel vorgesehen, der derart ausgebildet ist, dass er an der Schale befestigbar ist.

Vorteilhafte Weiterbildungen der Erfindung ergeben sich aus den in den abhängigen Patentansprüchen angegebenen Merkmalen.

Bei einer Ausführungsform der erfindungsgemässen Verpackungsschale sind die Maschenöffnungen des Netztes rund, linsenförmig, viereckig oder sechseckig.

Bei einer weiteren Ausführungsform der erfindungsgemässen Verpackungsschale weist das Netz Polypropylen (PP) oder Polyethylen (PE) auf. Sowohl Polypropylen als auch Polyethylen sind öl-, fett- und säurefest. Polypropylen ist gegenüber Polyethylen temperaturstabiler.

Bei einer zusätzlichen Ausführungsform der erfindungsgemässen Verpackungsschale besteht das Netz aus einem biologisch abbaubaren Material. Damit wird mit der erfindungsgemässen Verpackungsschale auch dem gesteigerten Umweltschutz Genüge getan.

Bei einer Weiterbildung der erfindungsgemässen Verpackungsschale weist die Stützstruktur wenigstens eine nach oben oder nach unten ragende Versteifungsrippe auf. Dies hat den Vorteil, dass die Verpackungsschale noch formstabiler ist.

Bei einer anderen Weiterbildung der erfindungsgemässen Verpackungsschale weist wenigstens eines der Aufnahmefächer auf seiner Unterseite ein Pufferfüsschen auf. Mit Hilfe der Pufferfüsschen können empfindliche Waren zusätzlich gegen Erschütterungen, Stösse und Schläge geschützt werden.

Vorteilhafter Weise weist die Stützstruktur der erfindungsgemässen Verpackungsschale entlang ihres Umfangs einen Stabilisierungsrand auf. Vorteilhafter Weise kann damit die erfindungsgemässe Verpackungsschale noch formstabiler gemacht werden.

Zudem kann vorgesehen sein, dass der Stabilisierungsrand der erfindungsgemässen Verpackungsschale als umgeschlagener, gefalzter oder gebördelter Rand ausgebildet ist oder eine Sicke aufweist. Ein Rand mit einer Sicke, die zum Beispiel U-förmig sein kann, oder auch umgeschlagener Rand sind in der Regel verwindungssteifer als ein abgekanteter Rand, wodurch die gesamte Verpackungsschale formstabiler wird. Bei einem Stapel von Verpackungsschalen kann die Form des Randes der Verpackungsschale eine Rolle spielen, wenn es auf deren Entstapelbarkeit ankommt. In der Regel kann eine Verpackungsschale mit einer Sicke im Rand oder einem umgeschlagenen Rand leichter vom Stapel genommen werden als jene mit einem abgekanteten Rand.

Des Weiteren kann bei der erfindungsgemässen Verpackungsschale vorgesehen sein, dass das extrudierte Netz der Stützstruktur eine Dicke zwischen 10 µm und 1 mm aufweist.

Darüber hinaus kann bei der erfindungsgemässen Verpackungsschale vorgesehen sein, dass die Stützstruktur einstückig ausgebildet ist. Dies wirkt sich auf den Herstellungsprozess vorteilhaft aus und hat den Vorteil, dass die Anzahl der Herstellungsschritte minimal ist.

Bei einer Weiterbildung der erfindungsgemässen Verpackung sind die Schale und der Deckel flüssigkeitsdicht ausgebildet.

Bei einer anderen Weiterbildung der erfindungsgemässen Verpackung ist der Deckel als Folie ausgebildet und mittels eines thermischen Prozesses an der Schale befestigt. Auf diese Weise kann der Deckel kostengünstig mit der Schale verbunden werden. Vorteilhafter Weise kann damit der Deckel auch dichtend mit der Schale verbunden werden.

Die oben beschriebene Verpackungsschale kann als Abtropfschale, Sortiereinlage, Schutzverpackung, Substratträger oder als Anzuchttöpfchen verwendet werden.

### Kurze Beschreibung der Zeichnungen

Im Folgenden wird die Erfindung mit mehreren Ausführungsbeispielen anhand von zehn Figuren weiter erläutert.
- Figur 1: zeigt eine erste mögliche Ausführungsform der erfindungsgemässen Verpackungsschale in einer dreidimensionalen Ansicht von oben.
- Figur 2: zeigt ein Detail der ersten Ausführungsform der erfindungsgemässen Verpackungsschale in einer dreidimensionalen Ansicht.
- Figur 3: zeigt die erste Ausführungsform der erfindungsgemässen Verpackungsschale in einer dreidimensionalen Ansicht von unten.
- Figur 4: zeigt eine mögliche Ausführungsform der erfindungsgemässen Verpackung mit der Verpackungsschale in einer dreidimensionalen Ansicht.
- Figur 5: zeigt die erfindungsgemässe Verpackung mit der Verpackungsschale in der Seitenansicht.
- Figur 6: zeigt eine zweite mögliche Ausführungsform der erfindungsgemässen Verpackungsschale in einer dreidimensionalen Ansicht von unten.
- Figur 7: zeigt ein Detail der zweiten Ausführungsform der erfindungsgemässen Verpackungsschale in einer dreidimensionalen Ansicht von unten.
- Figur 8: zeigt ein Detail der zweiten Ausführungsform der erfindungsgemässen Verpackungsschale in einer dreidimensionalen Ansicht von oben.
- Figur 9: zeigt eine dritte mögliche Ausführungsform der erfindungsgemässen Verpackungsschale in der dreidimensionalen Ansicht.
- Figur 10: zeigt die dritte Ausführungsform der erfindungsgemässen Verpackungsschale in der Seitenansicht.

### Wege zur Ausführung der Erfindung

Die erfindungsgemässe Verpackungsschale wird aus einem extrudierten Kunststoffnetz hergestellt. Die Herstellung eines extrudierten Kunststoffnetzes ist dem Fachmann bekannt. Ein mögliches Herstellungsverfahren für ein solches extrudiertes Kunststoffnetz wird in der Druckschrift DE 2 313 820 beschrieben. Dabei werden Kunststofffäden kontinuierlich im Strangpressverfahren zum Teil voneinander getrennt hergestellt und im noch nicht verfestigten Zustand zusammengeführt und selbsttätig miteinander verbunden, beispielsweise miteinander verschweisst. Hierbei werden kontinuierlich verlaufende Stränge oder Fäden, die in einem bestimmten Winkel zueinander verlaufen, sich also in einem bestimmten Winkel kreuzen, miteinander zu dem gewünschten Netz verbunden. Dazu ist ein Strangpresskopf vorgesehen, der zwei koaxial zueinander verlaufende und getrennt voneinander mündende Kanäle enthält, die an getrennte Extruder angeschlossen sind. Die Kanäle können wenigstens teilweise nach einem bestimmten Programm geöffnet oder geschlossen werden. Damit können die in Längsrichtung verlaufenden Fäden oder Stränge nicht nur in einer fortlaufenden Richtung kontinuierlich gelegt, sondern beispielsweise auch aus einzeln gegeneinander versetzen Abschnitten zusammengesetzt werden.

Ebenso ist es möglich, die in Querrichtung verlaufenden Fäden oder Stränge nicht nur als geradlinige Ringe, sondern beispielsweise auch als auf- und ablaufende Abschnitte herzustellen, welche die gegeneinander versetzten Abschnitte der in Längsrichtung verlaufenden Fäden oder Stränge verbinden, sodass sich Netze mit polygonalen, beispielsweise sechseckigen Öffnungen kontinuierlich herstellen lassen.

Es ist aber ebenso möglich, mit diesem Strangpresskopf konventionelle Kunststoffnetze, das heisst mit einander rechtwinklig überkreuzenden Längs- und Querfäden aus thermoplastischen Kunststoffen zu erzeugen. Dadurch, dass jeweils jede zweite der die Längsfäden bildenden Düsenöffnungen mittels eines Verschlussringes verschliessbar ist, können die Längsfäden unterbrochen beziehungsweise aus gegeneinander versetzten Abschnitten gebildet werden, wenn der Verschlussring periodisch schrittweise gedreht wird. Da diese Drehungen während der Öffnungszeiten des Ringschlitzes vorgenommen werden, wird das Netz nicht unterbrochen. Auch werden durch den Übergang von der einen Hälfte der zum Bilden der Längsfäden vorgesehenen Düsenöffnungen auf die andere Hälfte dieser Düsenöffnungen keine unschönen Erscheinungen am fertigen Netz hervorgerufen.

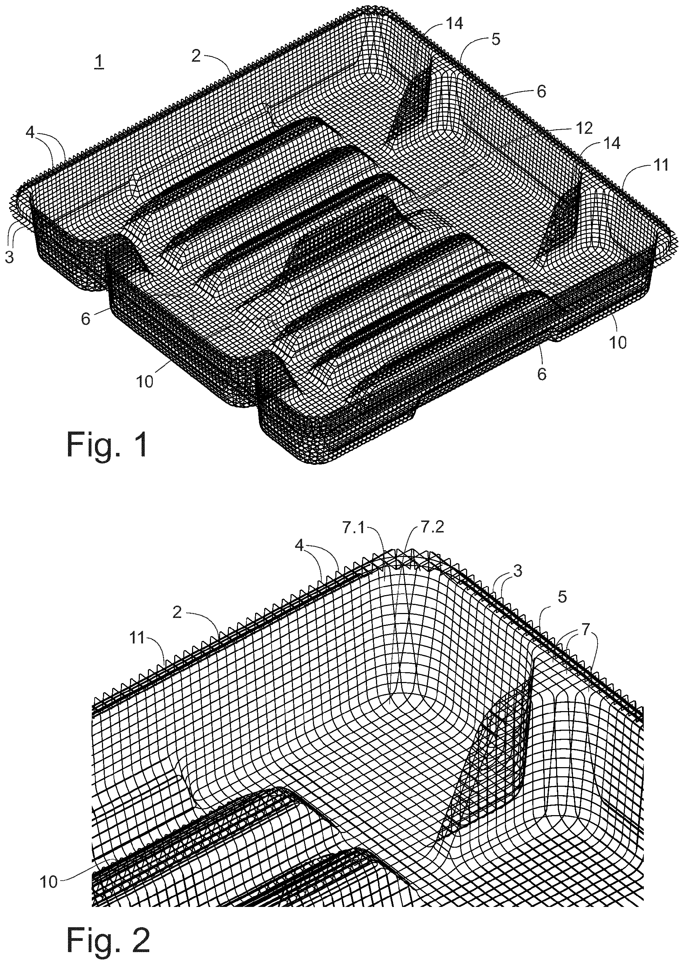

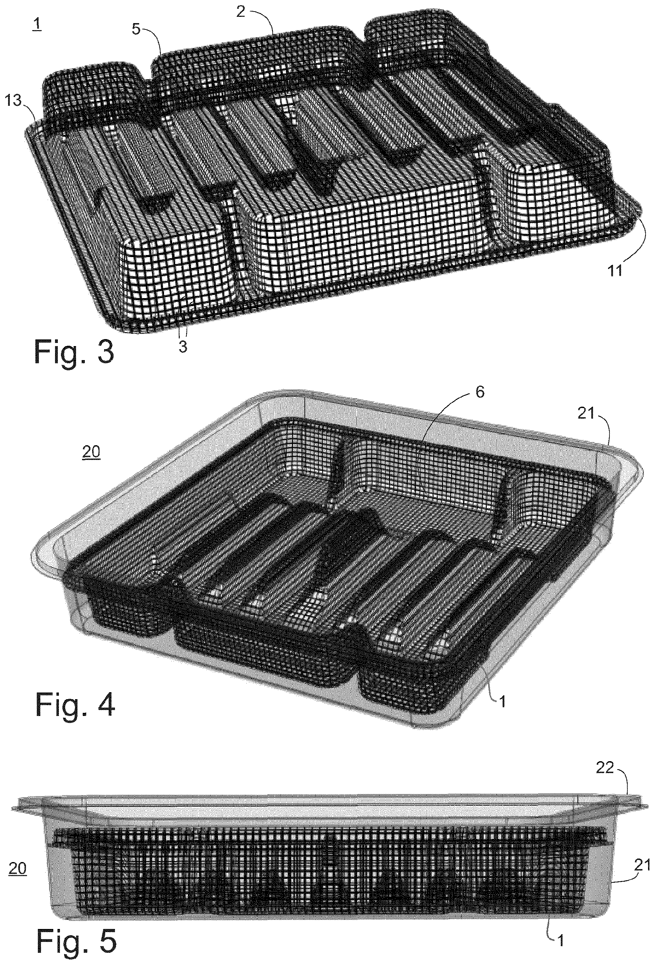

Figur 1 zeigt eine erste mögliche Ausführungsform der erfindungsgemässen Verpackungsschale 1 mit extrudierten Kunststoffnetz in einer dreidimensionalen Ansicht schräg von oben. Figur 2 zeigt einen Eckbereich der Verpackungsschale 1 in einer vergrösserten Ansicht. Figur 3 zeigt die Verpackungsschale 1 in einer dreidimensionalen Ansicht von unten. Die erfindungsgemässe Verpackungsschale 1 umfasst eine aus einem extrudierten Kunststoffnetz 2 gebildete formstabile Stützstruktur 5. Die Stützstruktur 5 wird auch als Tragstruktur bezeichnet. Die Stützstruktur 5 weist eine oder mehrere Aufnahmefächer 6 mit jeweils einer Vertiefung zur Aufnahme der zu verpackenden Ware auf. Die Aufnahmefächer 6 können zum Beispiel auch becher- oder wannenförmig ausgebildet sein.

Solange das extrudierte Kunststoffnetz 2 als Halbzeug vorliegt, hat es in der Regel eine Vielzahl von parallel zueinander liegenden Strängen 4 und eine Vielzahl von parallel zueinander liegenden Strängen 3. Die Stränge 3 und 4 kreuzen sich in einem bestimmten Winkel, wobei dieser Winkel durch das oben beschriebene Herstellungsverfahren vorgegeben werden kann. Der Winkel, der im Folgenden auch als Kreuzungswinkel bezeichnet wird, kann zum Beispiel 90° betragen. Es kann aber auch ein Halbzeug mit beinahe jedem anderen Kreuzungswinkel hergestellt werden. An den Kreuzungsstellen sind, wie beim Herstellungsverfahren gemäss DE 2 313 820 beschrieben, die Stränge 3 und 4 durch eine Verschweissung miteinander verbunden.

Wie insbesondere in Figur 2 zu erkennen ist, verlaufen die ursprünglich beim Halbzeug parallelen Stränge 3 im Eckbereich der Stützstruktur 5 nicht mehr parallel. Das Gleiche gilt sinngemäss auch für die ursprünglich beim Halbzeug parallel verlaufende Stränge 4. Auch die Form der Maschen 7 und die Öffnungsweite der Maschenöffnungen 7.1 und 7.2 können sich durch den thermoplastischen Verformungsprozess verändern, wie ebenfalls in Figur 2 zu erkennen ist. Der Grund hierfür liegt darin, dass das extrudierte Kunststoffnetz während des thermoplastischen Verformens an manchen Stellen mehr gedehnt wird als anderswo. Dies wiederum hat zur Folge, dass in den Bereichen, in denen das extrudierte Kunststoffnetz mehr gedehnt wird, es auch dünner wird als in jenen Bereichen, in denen es nicht oder nur wenig gedehnt wird.

Je nach verwendetem Halbzeug können die Maschen 7 des extrudierten Netztes 2 und deren Öffnungen 7.1, 7.2 zum Beispiel rund, linsenförmig, viereckig oder sechseckig sein.

Wenn das extrudierte Netz 2 als Halbzeug vorliegt, also bevor es mittels thermischer Umformung zur Stützstruktur 5 umgeformt worden ist, weist es vorzugsweise eine Dicke zwischen 0,1 mm und 2 mm auf. Nach der Umformung kann es stellenweise eine Dicke zwischen 10 µm und 1 mm haben.

Die Stützstruktur 5 kann, wie in Figur 1 gezeigt, einen durchgängigen Boden aufweisen. Dies ist aber nicht zwingend notwendig. So ist es auch denkbar, dass der Boden mehr oder weniger grosse Aussparungen aufweist. Diese in den Figuren nicht gezeigte Aussparungen können zum Beispiel durch Ausstanzen erzeugt werden. Am Boden der Verpackungsschale kann sich bei Bedarf ein saugfähiges Vlies befinden (in den Figuren nicht gezeigt). Wenn zum Beispiel Fleisch in der Verpackungsschale gelagert wird, kann das Vlies dazu dienen den Fleischsaft aufzunehmen. Da das Vlies vorzugsweise auf der Unterseite des Bodens der Verpackungsschale angeordnet ist, kann das Vlies nicht am Fleisch beziehungsweise an dem in der Verpackungsschale liegenden Lebensmittel anhaften, sondern verbleibt an der Verpackungsschale, wenn das Lebensmittel aus der Verpackungsschale genommen wird.

Die in Figur 1 abgebildete Stützstruktur 5 hat eine gleichbleibend hohe Seitenwand. Dies muss aber nicht zwingend so sein. So kann die Seitenwand an der einen oder anderen Stelle auch höher oder niedriger ausgebildet sein.

Die in Figur 1 gezeigte Stützstruktur 5 hat neun parallel verlaufende und nach oben in die Aufnahmefächer hineinragende Versteifungsrippen 10. Die Versteifungsrippen 10 können aber auch nach unten ragen. Zudem ist es möglich, dass ein Teil der Versteifungsrippen 10 nach oben und ein weiter Teil der Versteifungsrippen 10 nach unten ragt. Die Anzahl der Versteifungsrippen 10 und deren Orientierung zueinander ist vorzugsweise an die jeweiligen Bedürfnisse angepasst. Die Versteifungsrippen 10 haben den Vorteil, dass die erfindungsgemässe Verpackungsschale 1 damit noch formstabiler wird als sie es ohnehin schon ist. Die Versteifungsrippen 10 können auch so ausgebildet sein, dass sie den Innenraum der Stützstruktur 5 aufteilen und so zusätzliche Aufnahmefächer 6 bilden.

Weitere, etwas anderes als die Versteifungsrippen 10 geformte Versteifungsrippen 14 sind bei der Ausführungsform gemäss Figur 1 in den Seitenwänden der Stützstruktur 2 angeordnet. Bei dieser Ausführungsform ragen die weiteren Versteifungsrippen 14 nach innen. Die Versteifungsrippen 14 dienen zum einen einer zusätzlichen Formstabilität und teilen zum anderen den Innenraum der Stützstruktur 5 in weitere Aufnahmefächer 6 auf.

Bei Bedarf kann die Stützstruktur 5 in einem bestimmten Bereich so ausgeformt sein, dass das Material der Stützstruktur 5 dort als Griff 12 dienen kann. Der Griff 12 ist vorzugsweise im Bereich des Schwerpunkts angeordnet.

Bei der Verpackungsschale 1 weist die Stützstruktur 5 einen umlaufenden Rand 11 auf, der als Versteifungsrand ausgebildet sein kann. Der Versteifungsrand wird im Folgenden auch als Stabilisierungsrand bezeichnet. Dessen Querschnitt kann, wie in den Figur 3 dargestellt, U-förmig ausgebildet sein. Der Versteifungsrand 11 weist also eine umlaufende Sicke auf. Dies ist aber nicht zwingend notwendig. Stattdessen kann der Versteifungsrand 11 auch als umgeschlagener, gefalzter oder gebördelter Rand ausgebildet sein. Falls die zusätzliche Formstabilität an dieser Stelle nicht erforderlich sein sollte, kann auf den Versteifungsrand auch verzichtet werden.

Die formstabile Stützstruktur 5 kann zum Beispiel wie folgt hergestellt werden. Als Halbzeug dient ein extrudiertes Kunststoffnetz, das beispielsweise als Rollenware verfügbar ist. In dieser Form ist es noch flach, also im Wesentlichen zweidimensional.

Die Maschine zur Herstellung der Stützstruktur 5 umfasst eine Negativform und einen oberhalb der Negativform angeordneten Stempel. Der Stempel hat im Wesentlichen die gleiche Form (Positivform) wie die herzustellende Stützstruktur 5. Die Kontur des Stempels ist also ähnlich wie die Innenkontur der Stützstruktur geformt. Die Negativform bildet das Gegenstück zum Stempel und ist im Wesentlichen wie die Aussenkontur der Stützstruktur 5 geformt.

Zur Herstellung der Stützstruktur 5 wird ein ausreichend grosses Stück des extrudierten Kunststoffnetzes vorzugsweise plan zwischen dem Stempel und der Negativform positioniert. Das Stück Kunststoffnetz wird nun soweit erwärmt, dass es sich plastisch verformen lässt. Wenn das Kunststoffnetz ausreichend erwärmt ist, wird der Stempel abgesenkt. Dabei verformt er das Kunststoffnetz 2 und drückt es in die Negativform. Bei Bedarf kann das nun dreidimensional verformte Kunststoffnetz 2 auch noch umfangsseitig beschnitten werden. Anschliessend wird der Stempel wieder aus der Negativform herausgezogen; das plastisch verformte Kunststoffnetz 2 hat nun die Form der Stützstruktur 5. In einem nächsten Schritt wird die so gebildete Stützstruktur 5 soweit abgekühlt bis sich der Kunststoff nicht mehr oder so gut wie nicht mehr plastisch verformt. Schliesslich wird die Stützstruktur 5 aus der Negativform herausgenommen. Sie steht nun für die weitere Verwendung zur Verfügung.

Auf die oben beschriebene Art und Weise kann die Stützstruktur 5 mit beinahe jeder beliebigen Form hergestellt werden.

Die in den Figuren 1 bis 3 dargestellte Verpackungsschale 1 kann in eine Schale 21 hineingelegt werden und mit dieser zusammen eine Verpackung 20 bilden. Die Schale 21 wird im Folgenden auch als Aussenschale bezeichnet; die Verpackungsschale 1 hat dann die Funktion einer Innenschale. Figur 4 zeigt eine mögliche Ausführungsform einer solchen Verpackung 20 mit der Verpackungsschale 1 in einer dreidimensionalen Ansicht schräg von oben. Figur 5 zeigt die Verpackung 20 mit der Verpackungsschale 1 in der Seitenansicht. Die Schale 21 kann zum Beispiel aus einem transparenten oder opaken Kunststoff gefertigt sein, sodass durch die Schale 21 der Blick auf die Verpackungsschale 1 beziehungsweise deren Inhalt nicht versperrt wird. Die Schale 21 weist oben einen umlaufenden Rand auf, an dem ein Deckel 22 befestigt sein kann. Der Deckel 22 kann aus einer Folie hergestellt sein.

Der Deckel 22 und die Schale können flüssigkeitsdicht sein und der Deckel 22 kann derart an der Schale 21 befestigt sein, dass er zusammen mit der Schale 21 eine flüssigkeitsdichte Verpackung 20 bildet.

Der umlaufende Rand der Schale 21 kann einen Hinterzug aufweisen und mit einem im Randbereich entsprechend geformten Deckel 22 eine Schnappverbindung bilden. Auf diese Weise kann der Deckel 22 auf die Schale 21 aufgeschnappt werden. Wenn der Rand 11 der Stützstruktur 5 entsprechend geformt ist, kann der Deckel 22 auch auf die Stützstruktur 5 aufgeschnappt werden.

Der Deckel beziehungsweise die Folie 22 kann mit einer Etikette versehen sein (in den Figuren nicht gezeigt). Die Etikette kann mit Klebstoff auf den Deckel 22 geklebt sein. Stattdessen können der Deckel 22 und die Etikette auch miteinander verschmolzen werden (Inmould Labelling). Statt die Etikette auf dem Deckel 22 aufzubringen, kann sie auch auf oder an der Schale 21 angebracht sein.

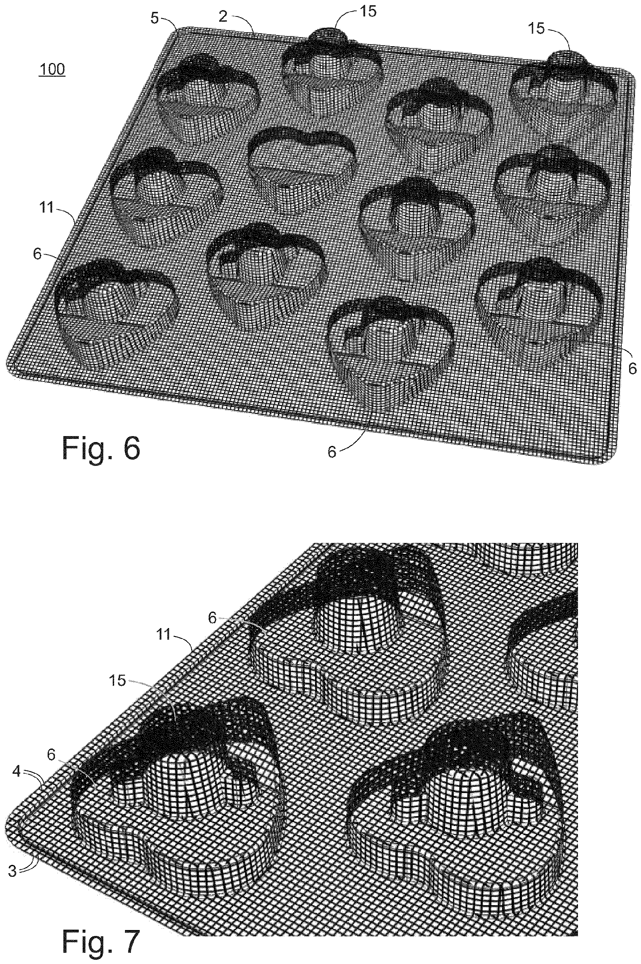

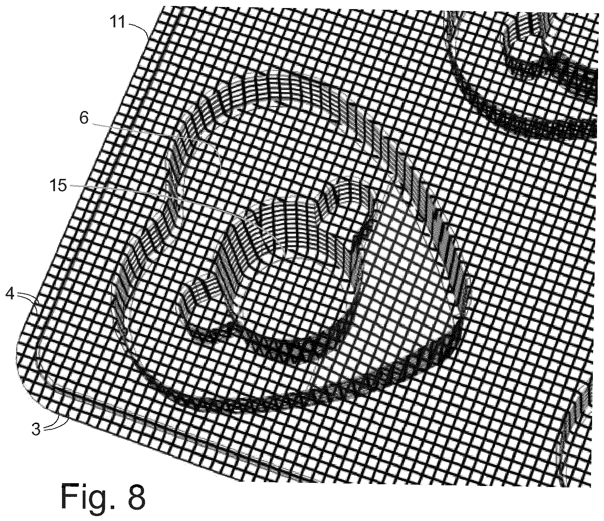

Figur 6 zeigt eine zweite mögliche Ausführungsform der erfindungsgemässen Verpackungsschale 100 in einer dreidimensionalen Ansicht von unten. Die so ausgestaltete Verpackungsschale 100 kann beispielsweise als Sortiereinlage benutzt werden. Die Stützstruktur 5 der Verpackungsschale 100 ist hier so geformt, dass sich eine Reihe von herzförmigen Aufnahmefächern 6 ergeben. Figur 7 zeigt drei der herzförmigen Aufnahmefächer 6 der Verpackungsschale 100 in einer vergrösserten dreidimensionalen Ansicht von unten. Figur 8 zeigt eines der Aufnahmefächer 6 der Verpackungsschale 100 in einer dreidimensionalen Ansicht schräg von oben. Auch bei dieser Ausführungsform der Verpackungsschale 100 weist die Stützstruktur 5 einen umlaufenden Versteifungsrand 11 auf. Anders als bei der ersten Ausführungsform ist bei der der Verpackungsschale 100 der Versteifungsrand 11 gefalzt. Der umlaufende Rand 11 erhöht die Formstabilität der Verpackungsschale 100.

Es kann vorgesehen sein, dass, nachdem die Aufnahmefächer 6 befüllt wurden, am Rand 11 der Stützstruktur 5 eine Folie befestigt wird (in den Figuren nicht gezeigt), um die Aufnahmefächer 6 zu verschliessen. Die Folie kann mit einer Etikette bestückt oder bedruckt sein.

Wie in Figur 6 dargestellt, weisen bei der Verpackungsschale 100 einige der Aufnahmefächer 6 auf ihrer Unterseite jeweils ein Pufferfüsschen 15 auf. Mit Hilfe der Pufferfüsschen 15 können empfindliche Waren zusätzlich gegen Erschütterungen, Stösse und Schläge geschützt werden.

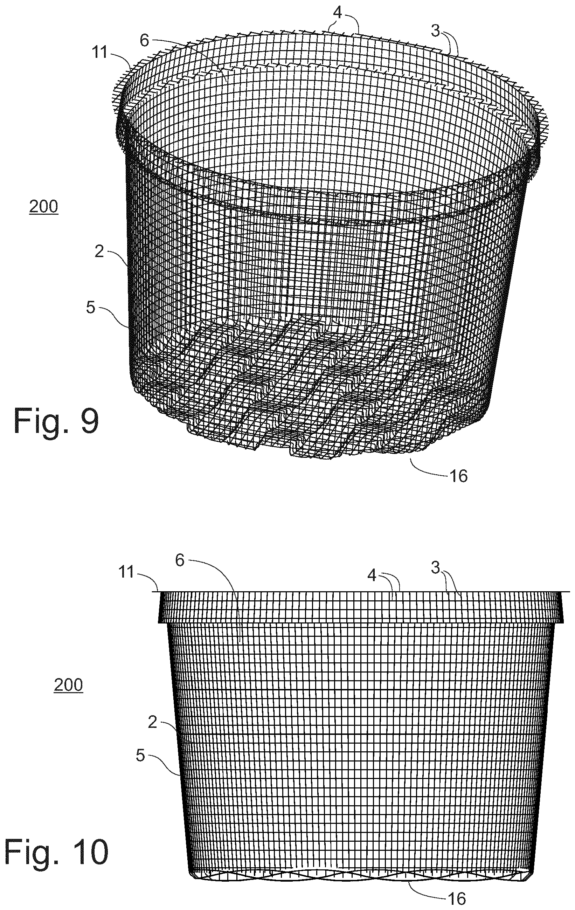

Figur 9 zeigt eine dritte mögliche Ausführungsform der erfindungsgemässen Verpackungsschale 200 in einer dreidimensionalen Ansicht. Figur 10 zeigt die Verpackungsschale 200 in der Seitenansicht. Bei dieser Ausführungsform hat die Verpackungsschale 200 ein einziges Aufnahmefach 6, das die Form eines Bechers hat. Die Verpackungsschale 200 kann zum Beispiel zur Aufnahme von Schüttgut oder als Anzuchttöpfchen für Setzlinge dienen.

Auch bei der Verpackungsschale 200 weist der umlaufende Rand 11 Abkantungen auf. Dadurch wird der Rand 11 und damit die gesamte Verpackungsschale 200 formstabiler.

Der Boden 16 der Verpackungsschale 200 kann, wie in Figur 9 dargestellt, wellenförmig ausgebildet sein. Dadurch entstehen Versteifungsrippen im Boden 16, die den Boden 16 formstabiler machen. Die Versteifungsrippen können zueinander versetzt angeordnet sein (siehe Figur 9).

Die Verpackungsschale 1, 100 beziehungsweise 200 ist vorteilhafter Weise so ausgebildet, dass sie die darin zu lagernde Ware stützt, an der gewünschten Position hält und/oder schützt.

Das extrudierte Kunststoffnetz 2 ist vorzugsweise aus Polypropylen (PP) oder Polyethylen (PE) hergestellt. Es ist aber auch möglich ein extrudiertes Kunststoffnetz aus Polystyrol oder Nylon zur Herstellung des Verpackungsschale 1 zu benutzten.

Die Verwendung eines biologisch abbaubaren Materials, wie zum Beispiel PLA (Polylactide) zur Herstellung des extrudierten Kunststoffnetzes 2 ist insbesondere im Hinblick auf den Umweltschutz von Vorteil.

Die Aufnahmefächer 6 können jeweils einen Boden aufweisen, wobei die Böden koplanar sein können.

Die Stützstruktur 5 kann zum Beispiel die Form eines Tabletts haben.

Die Verpackungsschale 1 kann zum Beispiel als Abtropfschale benutzt werden. Darin können Meeresfrüchte, wie Shrimps oder allgemein nasse Lebensmittel gelagert werden. Die Verpackungsschale 100 kann auch als Sortiereinlage dienen und beispielsweise Schokolade, Konfekt, Pralinen, Feingebäck oder dergleichen aufnehmen. Die Verpackungsschale 1, 100, 200 kann auch als Schutzverpackung benutzt werden, um Stösse, Schläge und Erschütterungen elastisch abzufangen. Des Weiteren kann die Verpackungsschale 1, 100, 200 auch als Substratträger, als Anzuchtplatte oder als Anzuchttöpfchen zur Aufnahme von Sämlingen, Pflanzen oder Wurzelballen dienen.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So sind beispielsweise die verschiedenen in den Figuren 1 bis 11 gezeigten Komponenten der Verpackungsschale 1, 100, 200 beziehungsweise der Verpackung 20 auch auf eine andere als in den Figuren gezeigte Weise miteinander kombinierbar.

### Bezugszeichenliste

- 1: Verpackungsschale
- 2: extrudiertes Kunststoffnetz
- 3: Strang
- 4: Strang
- 5: Stützstruktur
- 6: Aufnahmefach
- 7: Masche
- 7.1: Maschenöffnung
- 7.2: Maschenöffnung
- 10: Versteifungsrippe
- 11: Rand
- 12: Griff
- 13: Sicke
- 14: Versteifungsrippe
- 15: Pufferfüsschen
- 16: Boden
- 20: Verpackung
- 21: Schale/Aussenschale
- 22: Deckel
- 100: Verpackungsschale
- 200: Verpackungsschale

## Patentansprüche

1. Verpackungsschale,
- mit einer aus einem Kunststoffnetz (2) gebildeten, formstabilen Stützstruktur (5),
- wobei die Stützstruktur (5) ein oder mehrere Aufnahmefächer (6) mit jeweils einer Vertiefung zur Aufnahme der zu verpackenden Ware aufweist,
**dadurch gekennzeichnet, dass** das Kunststoffnetz (2) extrudiert ist.

2. Verpackungsschale nach Patentanspruch 1,
bei der die Öffnungen (7.1; 7.2) des Netztes (2) rund, linsenförmig, viereckig oder sechseckig sind.

3. Verpackungsschale nach Patentanspruch 1 oder 2,
bei der das Netz (2) Polypropylen (PP) oder Polyethylen (PE) aufweist.

4. Verpackungsschale nach Patentanspruch 1 oder 2,
bei der das Netz (2) aus einem biologisch abbaubaren Material besteht.

5. Verpackungsschale nach einem der Patentansprüche 1 bis 4,
bei der die Stützstruktur (5) wenigstens eine nach oben oder nach unten ragende Versteifungsrippe (10) aufweist.

6. Verpackungsschale nach einem der Patentansprüche 1 bis 5,
bei der wenigstens eines der Aufnahmefächer (6) auf seiner Unterseite ein Pufferfüsschen (15) aufweist.

7. Verpackungsschale nach einem der Patentansprüche 1 bis 6,
bei der die Stützstruktur (2) entlang ihres Umfangs einen Stabilisierungsrand (11) aufweist.

8. Verpackungsschale nach Patentanspruch 7,
bei der der Stabilisierungsrand (11) als umgeschlagener, gefalzter oder gebördelter Rand oder als Sicke (13) ausgebildet ist.

9. Verpackungsschale nach einem der Patentansprüche 1 bis 8,
bei der das extrudierte Netz (2) eine Dicke zwischen 10 µm und 1 mm aufweist.

10. Verpackungsschale nach einem der Patentansprüche 1 bis 9,
bei der die Stützstruktur (5) einstückig ausgebildet ist.

11. Verpackung mit einer Verpackungsschale nach einem der Patentansprüche 1 bis 10,
- die eine Schale (21) aufweist, in die die Verpackungsschale (5) eingelegt ist, und
- die einen Deckel (22) aufweist, der derart ausgebildet ist, dass er an der Schale (21) befestigbar ist.

12. Verpackung nach Patentanspruch 11,
bei der die Schale (21) und der Deckel (22) flüssigkeitsdicht ausgebildet sind.

13. Verpackung nach Patentanspruch 11 oder 12,
bei der der Deckel (22) als Folie ausgebildet ist und mittels eines thermischen Prozesses an der Schale (20) befestigt ist.

14. Verwendung der Verpackungsschale nach einem der Patentansprüche 1 bis 10,
als Abtropfschale, Sortiereinlage, Schutzverpackung, Substratträger oder als Anzuchttöpfchen.

## Claims

1. A packaging tray,
- comprising a dimensionally stable support structure (5) formed from a plastic net (2),
- wherein the support structure (5) has one or several receiving compartments (6), each comprising a depression for receiving the goods to be packaged,
**characterized in that**
the plastic net (2) is extruded.

2. The packaging tray according to claim 1,
in the case of which the openings (7.1; 7.2) of the net (2) are round, lenticular, square, or hexagonal.

3. The packaging tray according to claim 1 or 2,
in the case of which the net (2) has polypropylene (PP) or polyethylene (PE).

4. The packaging tray according to claim 1 or 2,
in the case of which the net (2) consists of a biodegradable material.

5. The packaging tray according to any one of claims 1 to 4,
in the case of which the support structure (5) has at least one reinforcing rib (10) protruding upwards or downwards.

6. The packaging tray according to any one of claims 1 to 5,
in the case of which at least one of the receiving compartments (6) has a small buffering foot (15) on its underside.

7. The packaging tray according to any one of claims 1 to 6,
in the case of which the support structure (2) has a stabilizing edge (11) along its circumference.

8. The packaging tray according to claim 7,
in the case of which the stabilizing edge (11) is formed as folded-over, folded, or flanged edge, or as bead (13).

9. The packaging tray according to any one of claims 1 to 8,
in the case of which the extruded net (2) has a thickness of between 10 µm and 1 mm.

10. The packaging tray according to any one of claims 1 to 9,
in the case of which the support structure (5) is formed in one piece.

11. A packaging comprising a packaging tray according to any one of claims 1 to 10,
- which has a tray (21), into which the packaging tray (5) is inserted, and
- which has a cover (22), which is formed in such a way that it can be fastened to the tray (21).

12. The packaging according to claim 11,
in the case of which the tray (21) and the cover (22) are formed in a liquid-tight manner.

13. The packaging according to claim 11 or 12,
in the case of which the cover (22) is formed as film and is fastened to the tray (20) by means of a thermal process.

14. Use of the packaging tray according to any one of claims 1 to 10,
as drip tray, sorting insert, protective packaging, substrate carrier, or as small cultivation pot.

## Revendications

1. Barquette d'emballage,
- avec une structure de support (5) dimensionnellement stable et formée d'un filet synthétique (2),
- la structure de support (5) présentant un ou plusieurs compartiments de réception (6), chacun étant doté d'un renfoncement pour recevoir le produit à emballer,
**caractérisée en ce que** le filet synthétique (2) est extrudé.

2. Barquette d'emballage selon la revendication 1,
dans laquelle les ouvertures (7.1 ; 7.2) du filet (2) sont rondes, lenticulaires, carrées ou hexagonales.

3. Barquette d'emballage selon la revendication 1 ou 2,
dans laquelle le filet (2) présente du polypropylène (PP) ou du polyéthylène (PE).

4. Barquette d'emballage selon la revendication 1 ou 2,
dans laquelle le filet (2) se compose d'un matériau biodégradable.

5. Barquette d'emballage selon l'une des revendications 1 à 4,
dans laquelle la structure de support (5) présente au moins une nervure de renforcement (10) dépassant vers le haut ou vers le bas.

6. Barquette d'emballage selon l'une des revendications 1 à 5,
dans laquelle au moins l'un des compartiments de réception (6) présente, sur sa face inférieure, un pied tampon (15).

7. Barquette d'emballage selon l'une des revendications 1 à 6,
dans laquelle la structure de support (2) présente un bord de stabilisation (11) le long de son pourtour.

8. Barquette d'emballage selon la revendication 7,
dans laquelle le bord de stabilisation (11) est conçu comme bord rabattu, plié ou bordé ou comme nervure (13).

9. Barquette d'emballage selon l'une des revendications 1 à 8,
dans laquelle le filet extrudé (2) présente une épaisseur comprise entre 10 µm et 1 mm.

10. Barquette d'emballage selon l'une des revendications 1 à 9,
dans laquelle la structure de support (5) est formée d'une seule pièce.

11. Emballage avec une barquette d'emballage selon l'une des revendications 1 à 10,
- qui présente une barquette (21) dans laquelle la barquette d'emballage (5) est introduite et
- qui présente un couvercle (22) conçu de telle manière à pouvoir être fixé sur la barquette (21).

12. Emballage selon la revendication 11,
dans lequel la barquette (21) et le couvercle (22) sont conçus pour être étanches aux liquides.

13. Emballage selon la revendication 11 ou 12,
dans lequel le couvercle (22) est conçu sous forme de film et fixé sur la barquette (20) au moyen d'un procédé thermique.

14. Utilisation de la barquette d'emballage selon l'une des revendications 1 à 10,
comme bac d'égouttage, insert de tri, emballage de protection, support de substrat ou pot de culture.
